# EUROPÄISCHE PATENTSCHRIFT

(11) **EP 2 869 742 B1**
(45) Veröffentlichungstag und Bekanntmachung des Hinweises auf die Patenterteilung: **13.07.2016**
(21) Anmeldenummer: 12787366.9
(22) Anmeldetag: 27.10.2012
(51) Int. Cl.: A47J 31/44

(54) **SYSTEM ZUR ZUBEREITUNG VON MILCH BZW. MILCHSCHAUM IN GETRÄNKEAUTOMATEN SOWIE EINE ERHITZEREINHEIT**
SYSTEM FOR PREPARING MILK AND/OR MILK FOAM IN DRINKS MACHINES, AND A HEATER UNIT
SYSTÈME DE PRÉPARATION DE LAIT OU DE MOUSSE DE LAIT DANS DES DISTRIBUTEURS AUTOMATIQUES DE BOISSONS ET UNITÉ DE CHAUFFAGE

(30) Priorität: 01.11.2011 CH 17602011
(43) Veröffentlichungstag der Anmeldung: 13.05.2015
(73) Patentinhaber: Eversys Holding SA, 1957 Ardon (CH)
(72) Erfinder: RIMPL, Frank, CH-8592 Sion (CH)
(74) Vertreter: Charrier Rapp & Liebau
(86) Internationale Anmeldenummer: PCT/EP2012/004508
(87) Internationale Veröffentlichungsnummer: WO 2013/064232

(56) Entgegenhaltungen:
- EP-A1- 0 919 176
- EP-A2- 1 256 299
- WO-A1-2008/083941
- DE-A1- 3 838 235
- US-A- 6 099 878

## Beschreibung

Die Erfindung betrifft ein Verfahren zur Zubereitung von Milch oder Milchschaum in Getränkeautomaten wie Kaffeemaschinen und ähnliche Einrichtungen, die mit einer Erhitzereinheit zum Beheizen der Milch bzw. des Milchschaums mit Dampft versehen sind. Die Erfindung betrifft auch die Ausgestaltung einer Erhitzereinheit für ein System zur Zubereitung von Milch oder Milchschaum.

Vorrichtungen und Verfahren zur Erzeugung und Ausgabe von Milchschaum und/oder erhitzter Milch sind aus der DE 38 38 535 A1 und der EP 0 919 176 A1 bekannt.

In Einrichtungen dieser Art werden bekanntlich sowohl Kaffee-, Milch- und Milchschaumgetränke als auch Mischgetränke wie beispielweise Milchkaffee oder Capuccino zubereitet. Zum Erhitzen der Milch bzw. des Milchschaums sind sie mit Venturisystemen ausgestattet, die in der Regel im Kaffeeauslauf eingebaut sind. Beispiele solcher Einrichtungen sind in den Druckschriften DE 36 50 343 T2, DE 44 45 436 C2, EP 0234 236 BI und EP 0 344 859 BI geoffenbart. Sie zeichnen sich dadurch aus, dass bei ihnen eine Kopplung von Förderung und Erhitzung des Produkts durch die Verwendung des Dampfs gleichsam als Heiz- und Treibmedium stattfindet.

Es ist bei diesen bekannten Systemen von Nachteil, dass sie eine geringe Heizleistung und/oder eine schlechte Regelbarkeit der Produktqualität und/oder der Produkttemperatur aufweisen, was eine mangelhafte oder ungenügend konsistente Qualität des fertigen Endprodukts zur Folge hat.

Der Erfindung liegt die Aufgabe zugrunde, diese Nachteile zu vermeiden und ein Zubereitungssystem der eingangs genannten Art zu schaffen, das sich durch eine hohe Heizleistung bei gleichzeitig guter Regelbarkeit und minimierter thermischer Systemträgheit auszeichnet. Diese Aufgabe wird erfindungsgemäss durch ein Verfahren, eine Erhitzereinheit und eine Vorrichtung gemäss den unabhängigen Ansprüchen 1, 5 und 8 gelöst.

Das ermöglicht einerseits eine von der Erhitzung unabhängige Aufbereitung des Milchschaums, dessen Qualität somit unabhängig vom Erhitzungsvorgang regelbar ist. Die auf dem Prinzip der Dampfinjektion basierende Erhitzung bewirkt zudem, dass der Erhitzungsvorgang die Milchschaumqualität nicht beeinträchtigt. Andererseits wird durch den separaten Dampfzufuhr eine genaue Temperaturregelung des Produkts sichergestellt und die thermische Trägheit des Zubereitungssystems minimiert, um zu vermeiden, dass während oder nach der Heizphase Verkrustungen durch überhitzte Milch entstehen können.

Die Einspeisung des Dampfes in die Milch bzw. den Milchschaum kann erfindungsgemäss entweder kontinuierlich stattfinden, wobei sowohl das Heizmedium als auch das zu heizende Medium sich in einem kontinuierlichen Fluss befinden, als auch in einem diskontinuierlichen Prozess, wobei eine Portion des zu erhitzenden Mediums in die Erhitzereinheit gepumpt wird und anschliessend deren Inhalt durch Einspeisung des Wärmeträgers erhitzt wird, bevor die erhitzte Flüssigkeit durch den Zufluss nachfolgender kalter Flüssigkeit aus der Erhitzereinheit zum Maschinenauslauf gefördert wird.

Die Erfindung sieht ferner vor, dass die Zufuhr für die Milch und den Milchschaum mit einer Förderpumpe zum Befördern der Milch bzw. des Milchschaums durch die Erhitzereinheit und weiter zum Maschinenauslauf versehen ist. Zweckmässigerweise befindet sich auf der Ansaugseite der Förderpumpe eine zuschaltbare Luftzufuhr für die Zubereitung des Milchschaums. Die der Erhitzereinheit zugeführte Milch- bzw. Milchschaummenge ist durch Veränderung der Förderleistung der Pumpe regelbar.

Zur Verbesserung der Milchschaumqualität kann erfindungsgemäss zwischen der Förderpumpe und der Erhitzereinheit oder zwischen dieser und dem Maschinenauslauf ein zusätzlicher hydraulischer Widerstand, vorzugsweise in Gestalt einer Drossel oder eines statischen Mischers eingebaut sein. Die Milchschaumqualität ist durch den Einsatz regelbarer Drosseln einstellbar.

Die Erhitzung der Milch bzw. des Milchschaums erfolgt erfindungsgemäss unabhängig von der Förderung und Erzeugung des Milchschaums. Dadurch ist die Schaumqualität vom Grad der Erhitzung unabhängig. Zur Regelung der Produkttemperatur ist auf der Ausgangsseite der Erhitzereinheit ein Temperatursensor eingebaut. Mit Hilfe dieses Sensors lässt sich auch feststellen, ob noch Milch- bzw. Milchschaum in die Erhitzereinheit gepumpt wird. Bei Unterbrechung der Förderung steigt dann die Temperatur hinter der Erhitzereinheit sprungartig bis auf die Dampftemperatur an, und die Maschine signalisiert das dem Benutzer mit einem entsprechenden Signal.

Die Produkttemperatur ist durch Veränderung der Fördergeschwindigkeit der Milch bzw. des Milchschaums und/ oder durch Veränderung des in die Erhitzereinheit eingeleiteten Dampfstromes regelbar. Bei gepulster Einleitung des Dampfstroms kann die Heizleistung durch Veränderung der Pulsweite des Dampfstroms geregelt werden. Zur Optimierung der Regelung können weitere Temperatursensoren zur Messung der Milch, Milchschaum und/oder Dampftemperatur auf der Eingangsseite der Erhitzereinheit eingebaut sein.

Die Erfindung sieht ferner vor, dass die Erhitzereinheit mit einem inneren Durchführungskanal für den Dampf und einem in koaxial umgebenden Durchführungskanal für die Milch bzw. den Milchschaum versehen ist, wobei beide Durchführungskanäle miteinander durch mehrere quer zur Stromrichtung ausgerichtete Radialkanäle verbunden sind. Die Erhitzereinheit funktioniert mit dieser Ausbildung als Injektor, und der Dampf wird direkt durch die Radialkanäle in das zu erhitzende Medium quer zur Stromrichtung eingespeist. Das bewirkt eine schonende Erwärmung des Mediums bei weitgehender Beibehaltung der Schaumqual i tät des Milchschaums . Auf diese Weise kann auch eine hohe Heizleistung bei gleichzeitig guter Regelbarkeit und minimaler thermischer Trägheit des Zubereitungssystems erzielt werden.

Ferner ist es zwecks konstruktiv einfacher Ausbildung vorteilhaft, wenn die Erhitzereinheit sich erfindungsgemäss aus zwei koaxial ineinandergeführten Rohrteilen und zwei in ihnen dichtend verbundenen Kopfsteilen zusammensetzt, wobei der eine Kopf teil Anschlüsse für den Dampfzulauf und den Kaltmilch- bzw. Kaltmilchschaumzulauf aufweist, während der andere Kopfsteil mit einem Anschluss für den Heissmilch- bzw. Heissmilchschaumablauf versehen ist. Zweckmässigerweise ist der Anschluss für den Dampfzulauf stirnseitig in Achsrichtung der Rohrteile angeordnet. Die Anschlüsse für den Kaltmilch bzw. Kaltmilchschaumzulauf und für den Heissmilch- bzw. Heissmilchschaumablauf sind ihrerseits seitlich angeordnet, vorzugsweise quer zur Achsrichtung der Rohrteile.

Die Erfindung ist nachfolgend anhand eines Ausführungsbeispiels unter Bezugnahme auf die Zeichnung näher erläutert. Es zeigen:
- **Fig**. **1:**: ein Hydraulikdiagramm für das erfindungsgemässe Zubereitungssystem, aufs Wesentliche reduziert, und

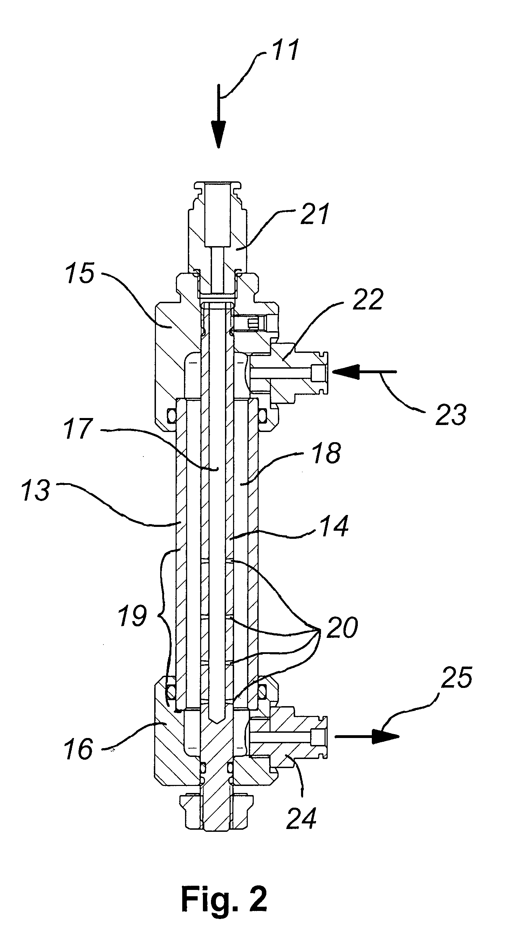

- **Fig. 2**:: eine Erhitzereinheit für das erfindungsgemässe Zubereitungssystem, im Schnitt dargestellt.

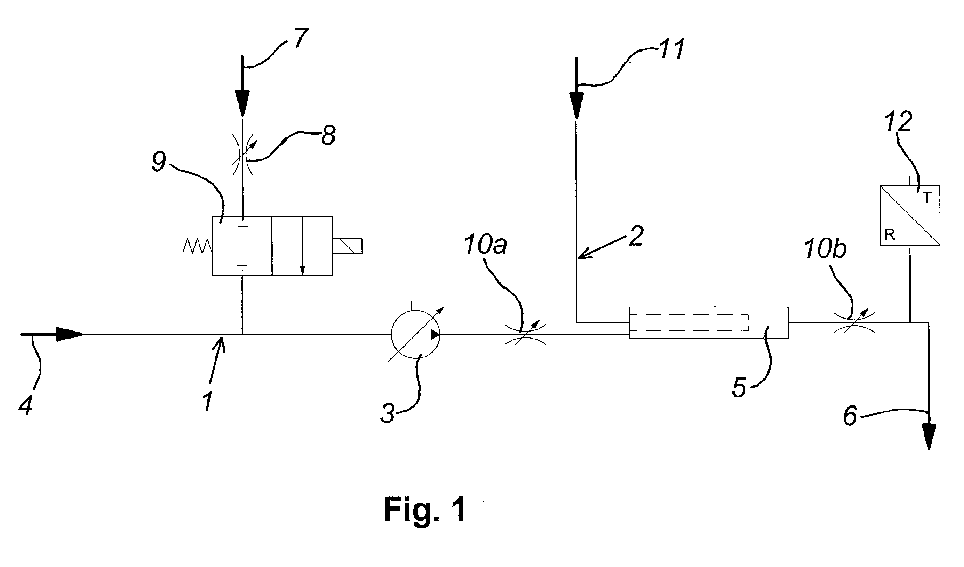

Wie aus Fig. 1 ersichtlich, besteht das Milch- und Milchschaumzubereitungssystem aus einer Zufuhr 1 für die Milch und den Milchschaum, sowie aus einer separaten Zufuhr 2 für den Dampf als Wärmeträger zum Erhitzen der Milch bzw. des Milchschaums.

In der Zufuhr 1 befindet Befördern der Milch bzw. sich eine Förderpumpe 3 zum des Milchschaums von einem Milchtank 4 zur Erhitzereinheit 5 und weiter zum Maschinenauslauf 6, sowie eine auf der Ansaugseite der Förderpumpe 3 zuschaltbare Luftzufuhr 7 mit einer Luftdrossel 8 und einem Luftventil 9 zur Zubereitung des Milchschaums.

Zwischen der Förderpumpe 3 und der Erhitzereinheit 5 und/oder zwischen dieser und dem Maschinenauslauf 6 ist ein zusätzlicher hydraulischer Widerstand in Gestalt einer Drossel 10a bzw. 10b eingebaut. Anstelle der Drossel kann auch ein statischer Mischer eingebaut sein.

Die zweite Zufuhr 2 enthält seinerseits einen Dampfzulauf 11 zur Erhitzereinheit 5 sowie einen auf der Ausgangsseite der Erhitzereinheit 5 angeordneten Temperatursensor 12 zur Messung der Temperatur des Produkts. Weitere Temperatursensoren zur Messung der Milch- bzw. Milchschau- und/oder Dampftemperatur können auf der Eingangsseite der Erhitzereinheit 5 eingebaut sein.

Die Regelung der Produkttemperatur kann mit Massnahmen wie Veränderung der Fördergeschwindigkeit des zu erhitzenden Mediums durch die Förderpumpe 3 oder Veränderung des Massenstroms des eingeleiteten Dampfes etwa durch ein Proportionalventil oder durch Veränderung des Druckes im Dampfboiler durchgeführt werden. Bei gepulster Einleitung des Dampfstroms ist die Heizleistung der Veränderung der Pulsweite regelbar.

Wie aus Figur 2 ersichtlich, besteht die Erhitzereinheit 5 aus zwei koaxial ineinandergeführten Rohrteilen 13, 14 und zwei dichtend mit ihnen verbundenen Kopfteilen 15, 16. Die Rohrteile 13, 14 bilden einen inneren Durchführungskanal 17 für den Dampf sowie einen ihn koaxial umgebenden Durchführungskanal 18 für die Milch bzw. den Milchschaum, wobei beide Durchführungskanäle im ausgangsseitigen Abschnitt 19 miteinander durch mehrere quer zur Stromrichtung ausgerichtete Radialkanäle 20 verbunden sind. Im Kopf teil 15 sind ein in Achsrichtung der Rohrteile 13, 14 ausgerichteter Anschluss 21 für den Dampfzulauf 11 und ein quer zur Achsrichtung ausgerichteter Anschluss 22 für den Kaltmilch- bzw. Kaltmilchschaumzulauf 23 angeordnet. Der Kopfteil 16 ist seinerseits mit einem ebenfalls quer zur Achsrichtung ausgerichteten Anschluss 24 für den Heissmilch bzw. Heissmilchschaumablauf 25 ausgestattet. Diese Anordnung der Anschlüsse erleichtert die Verlegung und den Zusammenbau der dazugehörigen Rohrleitungen.

Die erfindungsgemässe Anordnung des Zubereitungssystems mit den getrennten Kreisläufen 1 und 2 ermöglicht es, den Milchschäumprozess unabhängig vom Erhitzungsprozess zu regulieren, was eine verbesserte Qualität des Milchschaumproduktes mit sich bringt. Entsprechendes gilt aber ebenfalls umgekehrt, d. h., die erfindungsgemässe Anordnung ermöglicht auch die genaue Regulierung der Produkttemperatur, ohne die Milchschaumqualität negativ zu beeinflussen. Der dafür vorgesehene Temperatursensor 12 kann auch infolge eines plötzlichen Temperaturanstieges registrieren, ob Flüssigkeit gefördert wird oder nicht. Es ist somit z.B. auf diese Weise feststellbar, ob der Milchbehälter leer ist, oder ob beim Spülen des Systems der Vorratsbehälter für die Spülflüssigkeit entleert ist.

Die erfindungsgemässe Erhitzereinheit ermöglicht mit ihrer Arbeitsweise als Injektor die direkte Einspeisung des Dampfs in die Milch bzw. den Milchschaum. Das bewirkt sowohl eine höhere Heizleistung als auch eine genauere Regelbarkeit des Erhitzungsvorgangs, ohne dass die Milchschaumqualität negativ beeinflusst wird. Diese Arbeitsweise ermöglicht es auch, die thermische Trägheit im gesamten System zu minimieren und damit Verkrustungen durch überhitzte Milch während oder nach der Heizphase zu vermeiden.

Das Zubereitungssystem kann mit zusätzlichen Steuermitteln wie etwa Ventile zum Steuern des Produktflusses in verschiedene Ausläufe oder, aus Gründen der Reinigung oder der Produktqualität, in den Abfluss versehen sein. Im System können auch Ventile zum Einspeisen von Wasser in die Zufuhr, z.B. während des Reinigungsvorgangs, oder auch Ventile zum Ansaugen der Flüssigkeit aus unterschiedlichen Tanks eingebaut sein. Das System kann auch mit einem Durchflussmesser zur Überwachung der Portionsgrösse des Produkts versehen sein.

## Patentansprüche

1. Verfahren zur Zubereitung von Milch oder Milchschaum in Getränkeautomaten, die mit einer als Injektor arbeitenden Erhitzereinheit (5) zum Beheizen der Milch bzw. des Milchschaums mit Dampf versehen sind, wobei Milch oder Milchschaum über eine erste Zufuhr (1) und heisser Dampf über eine davon separierte zweite Zufuhr (2) zugeführt und der heisse Dampf in der Erhitzereinheit (5) als Wärmeträger in die Milch bzw. den Milchschaum eingespeist wird, **dadurch gekennzeichnet, dass** die Erhitzereinheit (5) mit einem inneren Durchführungskanal (17) und einen ihn koaxial umgebenden äusseren Durchführungskanal (18) versehen ist, wobei beide Durchführungskanäle (17, 18) miteinander durch mehrere quer zur Stromrichtung ausgerichtete Radialkanäle (20) verbunden sind und der heisse Dampf durch den inneren Durchführungskanal (17) und die Milch bzw. der Milchschaum durch den äusseren Durchführungskanal (18) zugeführt wird.

2. Verfahren nach Anspruch 1, **dadurch gekennzeichnet, dass** der Dampf in die Milch bzw. den Milchschaum entweder in einem kontinuierlichen oder in einen diskontinuierlichen Prozess eingespeist wird.

3. Verfahren nach Anspruch 1, **dadurch gekennzeichnet, dass** die Produkttemperatur durch Veränderung der Fördergeschwindigkeit der Milch bzw. des Milchschaums und/oder durch Veränderung des in die Erhitzereinheit (5) eingeleiteten Dampfstroms geregelt wird.

4. Verfahren nach Anspruch 1, **dadurch gekennzeichnet, dass** der Dampfstrom gepulst eingeleitet und die Heizleistung durch Veränderung der Pulsweite geregelt wird.

5. Erhitzereinheit für ein System zur Zubereitung von Milch oder Milchschaum, in dem heisser Dampf als Wärmeträger in die Milch oder den Milchschaum eingeleitet wird, **dadurch gekennzeichnet, dass** die Erhitzereinheit (5) mit einem inneren Durchführungskanal (17) für den Dampf und einem ihn koaxial umgebenden äußeren Durchführungskanal (18) für die Milch bzw. den Milchschaum versehen ist, wobei beide Durchführungskanäle miteinander durch mehrere quer zur Stromrichtung ausgerichtete Radialkanäle (20) verbunden sind.

6. Erhitzereinheit nach Anspruch 5, **dadurch gekennzeichnet, dass** die Erhitzereinheit (5) zwei koaxial ineinandergeführte Rohrteile (13, 14) und zwei mit ihnen dichtend verbundene Kopfteile (15, 16) umfasst, wobei der eine Kopfteil (15) Anschlüsse (21, 22) für den Dampfzu- oder ablauf (11) und den Kaltmilch- bzw. Kaltmilchschaumzu- oder ablauf (23) aufweist, während der andere Kopfteil (16) mit einem Anschluss (24) für den Heissmilch- bzw. Heissmilchschaumzu- oder ablauf (25) versehen ist.

7. Erhitzereinheit nach Anspruch 6, **dadurch gekennzeichnet, dass** der Anschluss (21) für den Dampfzulauf (11) stirnseitig in Achsrichtung der Rohrteile (13, 14) angeordnet ist, während die Anschlüsse (22, 24) für den Kaltmilch- und Kaltmilchschaumzulauf (23) bzw. den Heissmilch- und Heissmilchschaumablauf (25) seitlich angeordnet sind, vorzugsweise quer zur Achsrichtung der Rohrteile (13, 14).

8. Vorrichtung zur Zubereitung von Milch oder Milchschaum, umfassend eine als Injektor arbeitende Erhitzereinheit (5) nach einem der Ansprüche 5 bis 7, mit einer ersten Zufuhr (1) für Milch oder Milchschaum und einer separaten zweiten Zufuhr (2) zur Zuführung von heissem Dampf als Wärmeträger in die Milch bzw. den Milchschaum, wobei die erste Zufuhr (1) einerseits mit einem Milchtank (4) und andererseits mit dem äußeren Durchführungskanal (18) der Erhitzereinheit (5) und die zweite Zufuhr (2) einerseits mit einem Dampfzulauf (11) und andererseits mit dem inneren Durchführungskanal (17) der Erhitzereinheit (5) verbunden ist.

9. Vorrichtung nach Anspruch 8, **dadurch gekennzeichnet, dass** die erste Zufuhr (1) für die Milch bzw. den Milchschaum mit einer Förderpumpe (3) zum Befördern der Milch bzw. des Milchschaums durch die Erhitzereinheit (5) und weiter zu einem Maschinenauslauf (6) versehen ist.

10. Vorrichtung nach Anspruch 9, **dadurch gekennzeichnet, dass** auf der Ansaugseite der Förderpumpe (3) eine zuschaltbare Luftzufuhr (7) für die Zubereitung von Milchschaum vorhanden ist.

11. Vorrichtung nach Anspruch 10, **dadurch gekennzeichnet, dass** zwischen der Förderpumpe (3) und der Erhitzereinheit (5) und/oder zwischen der Erhitzereinheit (5) und dem Maschinenauslauf (6) ein zusätzlicher hydraulischer Widerstand (10a, 10b), vorzugsweise in Gestalt einer Drossel oder eines statischen Mischers eingebaut ist.

12. Vorrichtung nach einem der Ansprüche 8 bis 11, **dadurch gekennzeichnet, dass** auf der Ausgangsseite der Erhitzereinheit (5) ein Temperatursensor (12) zur Messung der Produkttemperatur eingebaut ist.

13. Vorrichtung nach Anspruch 12, **dadurch gekennzeichnet, dass** auf der Eingangsseite der Erhitzereinheit (5) weitere Temperatursensoren zur Messung der Milch- bzw. Milchschaum- und/oder Dampftemperatur vorhanden sind.

## Claims

1. Method for preparing milk or milk foam in automatic drinks machines which are provided with a heater unit (5) working as an injector to heat the milk or milk foam with steam, wherein milk or milk foam is supplied through a first supply (1) and hot steam is supplied through a second supply (2) which is separated from it and the hot steam in the heater unit (5) is introduced as heating medium into the milk or the milk foam, **characterised in that** the heater unit (5) is provided with an inner delivery channel (17) and an outer coaxial delivery channel (18) surrounding it, wherein the two delivery channels (17, 18) are connected with one another by a plurality of radial channels (20) aligned transversely to the direction of flow and the hot steam is supplied through the inner delivery channel (17) and the milk or the milk foam is supplied through the outer delivery channel (18).

2. Method according to claim 1, **characterised in that** the steam is introduced into the milk or the milk foam either in a continuous or in a discontinuous process.

3. Method according to claim 1, **characterised in that** the temperature of the product is regulated by changing the speed of delivery of the milk or the milk foam and/or by changing the stream of steam introduced into the heater unit (5).

4. Method according to claim 1, **characterised in that** the stream of steam is introduced in pulsed form and the heating power is regulated by changing the pulse width.

5. Heater unit for a system for preparing milk or milk foam in which hot steam as heating medium is introduced into the milk or the milk foam, **characterised in that** the heater unit (5) is provided with an inner delivery channel (17) for the steam and an outer coaxial delivery channel (18) surrounding it for the milk or the milk foam, wherein the two delivery channels are connected with one another by a plurality of radial channels (20) aligned transversely to the direction of flow.

6. Heater unit according to claim 5, **characterised in that** the heater unit (5) comprises two pipe sections (13, 14) which are fitted into one another coaxially and two head sections (15, 16) which are connected sealingly with them, wherein one head section (15) has connections (21, 22) for the steam inlet or outlet (11) and the cold milk or cold milk foam inlet or outlet (23) while the other head section (16) is provided with a connection (24) for the hot milk or hot milk foam inlet or outlet (25).

7. Heater unit according to claim 6, **characterised in that** the connection (21) for the steam inlet (11) is arranged in the end in the axial direction of the pipe sections (13, 14), while the connections (22, 24) for the cold milk and cold milk foam inlet (23) or the hot milk and hot milk foam outlet (25) are arranged at the side, preferably transversely to the axial direction of the pipe sections (13, 14).

8. Device for preparing milk or milk foam, comprising a heater unit (5) working as an injector according to one of claims 5 to 7, with a first supply (1) for milk or milk foam and a separate second supply (2) for introducing hot steam as heating medium into the milk or the milk foam, wherein the first supply (1) is connected firstly with a milk tank (4) and secondly with the outer delivery channel (18) of the heater unit (5), and the second supply (2) is connected firstly with a steam inlet (11) and secondly with the inner delivery channel (17) of the heater unit (5).

9. Device according to claim 8, **characterised in that** the first supply (1) for the milk or the milk foam is provided with a feed pump (3) for conveying the milk or the milk foam through the heater unit (5) and onwards to a machine outlet (6).

10. Device according to claim 9, **characterised in that** a switchable air supply (7) is present on the intake side of the feed pump (3) for preparing milk foam.

11. Device according to claim 10, **characterised in that** an additional hydraulic resistance (10a, 10b), preferably in the form of a choke or a static mixer, is fitted between the feed pump (3) and the heater unit (5) and/or between the heater unit (5) and the machine outlet (6).

12. Device according to one of claims 8 to 11, **characterised in that** a temperature sensor (12) for measuring the temperature of the product is fitted on the outlet side of the heater unit (5).

13. Device according to claim 12, **characterised in that** further temperature sensors are present on the inlet side of the heater unit (5) for measuring the temperature of the milk or milk foam and/or steam.

## Revendications

1. Procédé servant à préparer du lait ou de la mousse de lait dans des distributeurs automatiques de boissons, qui sont pourvus d'une unité de réchauffage (5) fonctionnant en tant qu'injecteur, servant à chauffer le lait ou la mousse de lait avec de la vapeur, sachant que le lait ou la mousse de lait sont amenés, par l'intermédiaire d'une première amenée (1) et que la vapeur très chaude est amenée par l'intermédiaire d'une deuxième amenée séparée de la première amenée et que la vapeur très chaude est injectée dans l'unité de réchauffage (5) en tant qu'agent caloporteur dans le lait ou dans la mousse de lait, **caractérisé en ce que** l'unité de réchauffage (5) est pourvue d'un canal de passage (17) intérieur et d'un canal de passage (18) extérieur entourant ce dernier de manière coaxiale, sachant que les deux canaux de passage (17, 18) sont reliés l'un à l'autre par plusieurs canaux radiaux (20) orientés de manière transversale par rapport au sens du flux et que la vapeur très chaude est amenée par le canal de passage (17) intérieur et que le lait ou la mousse de lait sont amenés par le canal de passage (18) extérieur.

2. Procédé selon la revendication 1, **caractérisé en ce que** la vapeur est injectée dans le lait ou dans la mousse de lait soit lors d'un processus continu soit lors d'un processus discontinu.

3. Procédé selon la revendication 1, **caractérisé en ce que** la température du produit est réglée par la modification de la vitesse de refoulement du lait ou de la mousse de lait et/ou par la modification du flux de vapeur introduit dans l'unité de réchauffage (5).

4. Procédé selon la revendication 1, **caractérisé en ce que** le flux de vapeur est introduit de manière pulsée, et **en ce que** la puissance de chauffage est réglée par la modification de la largeur d'impulsion.

5. Unité de réchauffage destinée à un système servant à préparer du lait ou de la mousse de lait, dans lequel de la vapeur très chaude est introduite en tant qu'agent caloporteur dans le lait ou dans la mousse de lait, **caractérisée en ce que** l'unité de réchauffage (5) est pourvue d'un canal de passage (17) intérieur pour la vapeur et d'un canal de passage (18) extérieur, entourant ce dernier de manière coaxiale, pour le lait ou pour la mousse de lait, sachant que les deux canaux de passage sont reliés l'un à l'autre par plusieurs canaux radiaux (20) orientés de manière transversale par rapport au sens de flux.

6. Unité de réchauffage selon la revendication 5, **caractérisée en ce que** l'unité de réchauffage (5) comprend deux parties de tube (13, 14) imbriquées l'une dans l'autre de manière coaxiale et deux parties de tête (15, 16) reliées auxdites parties de tube de manière à assurer l'étanchéité, sachant que l'une des parties de tête (15) présente des raccords (21, 22) pour l'arrivée ou l'évacuation de vapeur (11) et pour l'arrivée ou l'évacuation de lait froid ou de mousse de lait froid (23), tandis que l'autre partie de tête (23) est pourvue d'un raccord (24) pour l'arrivée ou l'évacuation de lait très chaud ou de mousse de lait très chaud.

7. Unité de réchauffage selon la revendication 6, **caractérisée en ce que** le raccord (21) pour l'arrivée de vapeur (11) est disposé côté frontal dans le sens axial des parties de tube (13, 14), tandis que les raccords (22, 24) pour l'arrivée de lait froid ou de mousse de lait froid (23) ou pour l'évacuation de lait très chaud ou de mousse de lait très chaud sont disposés sur le côté, de préférence de manière transversale par rapport au sens axial des parties de tube (13, 14) .

8. Dispositif servant à préparer du lait ou de la mousse de lait, comprenant une unité de réchauffage (5) fonctionnant en tant qu'injecteur selon l'une quelconque des revendications 5 à 7, comprenant une première amenée (1) pour le lait ou pour la mousse de lait et une deuxième amenée (2) séparée servant à amener de la vapeur très chaude faisant office d'agent caloporteur dans le lait ou dans la mousse de lait, sachant que la première amenée (1) est reliée d'une part à un réservoir de lait (4) et d'autre part au canal de passage (8) extérieur de l'unité de réchauffage (5) et que la deuxième amenée (2) est reliée d'une part à une arrivée de vapeur (11) et d'autre part au canal de passage (17) intérieur de l'unité de réchauffage (5).

9. Dispositif selon la revendication 8, **caractérisé en ce que** la première amenée (1) pour le lait ou pour la mousse de lait est pourvue d'une pompe de refoulement (3) servant à refouler le lait ou la mousse de lait à travers l'unité de réchauffage (5) puis en direction d'une décharge de machine (6).

10. Dispositif selon la revendication 9, **caractérisé en ce qu'**une amenée d'air (7) pouvant être activée est présente sur le côté d'aspiration de la pompe de refoulement (3) pour la préparation de la mousse de lait.

11. Dispositif selon la revendication 10, **caractérisé en ce qu'**une résistance (10a, 10b) hydraulique supplémentaire, se présentant de préférence sous la forme d'un étranglement ou d'un mélangeur hydrostatique, est installée entre la pompe de refoulement (3) et l'unité de réchauffage (5) et/ou entre l'unité de réchauffage (5) et la décharge de machine (6).

12. Dispositif selon l'une quelconque des revendications 8 à 11, **caractérisé en ce qu'**un capteur de température (12) servant à mesurer la température de produit est installé sur le côté de sortie de l'unité de réchauffage (5).

13. Dispositif selon la revendication 12, **caractérisé en ce que** d'autres capteurs de température servant à mesurer la température du lait ou de la mousse de lait et/ou la température de la vapeur sont présents sur le côté d'entrée de l'unité de réchauffage (5) .
